# EUROPÄISCHE PATENTSCHRIFT

(11) **EP 1 956 171 B1**
(45) Veröffentlichungstag und Bekanntmachung des Hinweises auf die Patenterteilung: **09.03.2011**
(21) Anmeldenummer: 07023743.3
(22) Anmeldetag: 07.12.2007
(51) Int. Cl.: E05F 15/10, E05F 15/20

(54) **Verfahren zum Betrieb eines Torantriebes und Torantrieb**
Method for operating a door drive and door drive
Procédé destiné au fonctionnement d'un entraînement de porte et entraînement de porte

(30) Priorität: 06.02.2007 DE 102007005881
(43) Veröffentlichungstag der Anmeldung: 13.08.2008
(73) Patentinhaber: Marantec Antriebs- und Steuerungstechnik GmbH & Co. KG., 33428 Marienfeld (DE)
(72) Erfinder: Hörmann, Michael, 33790 Halle (DE)
(74) Vertreter: Laufhütte, Dieter

(56) Entgegenhaltungen:
- DE-A1-102004 002 127
- GB-A- 2 378 220
- US-A1- 2003 025 470

## Beschreibung

Die vorliegende Erfindung betrifft ein Verfahren zum Betrieb eines Torantriebs, welcher mindestens einen Schnelllaufmodus und mindestens einen Normallaufmodus aufweist. Ebenso betrifft die vorliegende Erfindung einen solchen Torantrieb mit einer entsprechenden Steuerung.

Bei diesen sogenannten Schnelllaufantrieben wird dabei üblicherweise im Schnelllaufmodus das Tor mit höherer Geschwindigkeit geöffnet und mit Normalgeschwindigkeit geschlossen. Im Normalmodus wird das Tor dagegen sowohl während des Öffnens als auch des Schließens mit Normalgeschwindigkeit verfahren. Solche Schnelllaufantriebe kommen dabei insbesondere bei Roll-, Dreh- oder Schiebetoren, und weiter insbesondere bei Industrietoren, Garagentoren und/oder Hoftoren zum Einsatz.

Die höhere Geschwindigkeit im Schnellaufmodus belastet dabei den Torantrieb stark, während die langsamere Geschwindigkeit im Normalmodus den Antrieb schont. Um eine Überlastung des Torantriebes zu vermeiden, werden deshalb bekannte Torantriebe üblicherweise so ausgelegt, daß innerhalb eines gewissen Zeitintervalls nur eine fest vorgegebene Anzahl von Torlaufzyklen mit der maximalen Geschwindigkeit gefahren werden kann. Zum Beispiel öffnet der Antrieb maximal zweimal mit hoher Geschwindigkeit, während die darauf folgenden Zyklen nur mit Normalgeschwindigkeit möglich sind. Diese Begrenzung der Schnellaufzyklen kann sich dabei auch auf eine Zeitdauer von z.B. 10, 30 oder 60 Minuten beziehen.

Problematisch bei dieser Ansteuerung ist, daß die Schnelllauffunktion nicht optimal verfügbar ist. Die starre Steuerung, welche nur auf die Anzahl der Zyklen in einem gewissen festen Zeitintervall abstellt, verhindert einen Betrieb im Schnelllaufmodus auch dann, wenn der Torantrieb nach der erlaubten Anzahl von Schnelllaufzyklen in Wirklichkeit nicht stark belastet ist, z. B. weil das Tor sehr leichtgängig läuft, und deshalb ohne die Gefahr einer Überlastung weiterhin im Schnellaufmodus betrieben werden könnte.

Aus der GB 2 378 220 A ist eine Überwachungsvorrichtung sowie eine Regeleinrichtung für einen Garagentorantrieb bekannt.

Aufgabe der vorliegenden Erfindung ist es daher, ein Verfahren zum Betrieb eines Torantriebes zur Verfügung zu stellen, welches eine Überlastung des Torantriebes verhindert und dennoch eine optimale Verfügbarkeit des Schnelllaufmodus gewährleistet.

Erfindungsgemäß wird diese Aufgabe von einem Verfahren gemäß Anspruch 1 sowie einem entsprechenden Torantrieb gemäß Anspruch 8 gelöst. Das erfindungsgemäße Verfahren umfaßt dabei die folgenden Schritte: Bestimmen eines lastabhängigen Betriebsparameters des Torantriebes, Wechseln vom Schnelllaufmodus in den Normallaufmodus in Abhängigkeit von dem lastabhängigen Betriebsparameter, um eine Überlastung des Torantriebs zu verhindern. Vorteilhafterweise wird der Torantrieb dabei im Schnelllaufmodus betrieben, solange der lastabhängige Betriebsparameter einen Grenzwert nicht übersteigt, während er im Normallaufmodus betrieben wird, sobald der lastabhängige Betriebsparameter den Grenzwert übersteigt.

Der lastabhängige Betriebsparameter ist ein Wert, welcher nicht mehr nur von der Anzahl der Torlaufzyklen abhängt, sondern auch von der tatsächlichen Belastung des Torantriebs während dieser Torlaufzyklen. Dabei erhöht sich der lastabhängige Parameter durch einen den Antrieb stark belastenden Schnelllaufzyklus stärker als durch einen den Antrieb weniger stark belastenden, ansonsten aber identischen Schnelllaufzyklus, während nach dem Stand der Technik jeder Schnelllaufzyklus unabhängig von der tatsächlichen Belastung des Antriebs gleich gewertet wurde.

Indem die Steuerung erfindungsgemäß nicht von einer festen Zyklenanzahl, sondern einem lastabhängigen Betriebsparameter des Torantriebes abhängt, kann diese an die tatsächliche Belastung des Torantriebes angepaßt werden. Die Anzahl der möglichen Schnelllaufzyklen ist dadurch nicht mehr konstant und nur zeitgesteuert, sondern es wird die tatsächliche Belastung des Torantriebes ermittelt und nur in den Normalmodus geschaltet, wenn tatsächlich eine Überlastung des Antriebssystems droht. Dabei reduziert der Antrieb seine Abgabeleistung (z. B. die Geschwindigkeit) automatisch, wenn anhand der bisherigen Belastung des Systems mit einer Überlastung zu rechnen ist.

Durch die variable Steuerung der Geschwindigkeit in Abhängigkeit von der tatsächlichen Belastung des Torantriebes wird die Überlastung des Torantriebes vermieden und die Lebensdauer des Systems erhöht, ohne die Verfügbarkeit des Schnelllaufmodus unnötig einzuschränken. Anders als bei herkömmlichen Verfahren, bei welchen ein großer Sicherheitsabstand zwischen den während eines Zeitintervalls erlaubten Schnelllaufzyklen und den tatsächlich möglichen Schnelllaufzyklen nötig war, um für alle möglichen Anwendungsfälle, z. B. auch mit sehr schwergängigen Toren, eine Überlastung zu verhindern, können durch die Steuerung auf Grundlage der realen Belastung des Torantriebes üblicherweise sehr viel mehr Schnelllaufzyklen gefahren werden, so daß z. B. leichtgängige Tore ohne Einschränkung erheblich häufiger verfahren werden können. Hierdurch ist eine Überdimensionierung des Antriebes für alle möglichen Anwendungsfälle nicht mehr erforderlich. Gerade bei Torantrieben, welche unterschiedlich stark frequentiert werden, ergeben sich so erhebliche Vorteile bezüglich der Kosten und des Platzbedarfs.

Vorteilhafterweise umfaßt dabei das Bestimmen des lastabhängigen Betriebsparameters die Messung der Temperatur einer Komponente des Torantriebes, insbesondere des Motors oder der Leistungselektronik. Die Temperatur dieser Komponenten ist dabei von der vorausgegangenen Belastung des Antriebs abhängig und ermöglicht so die erfindungsgemäße Ansteuerung des Torantriebes.

Vorteilhafterweise hängt dabei der lastabhängige Betriebsparameter von der gemessenen Temperatur und/oder der Änderung der gemessenen Temperatur ab, wobei er insbesondere der gemessenen Temperatur oder der Änderung der gemessenen Temperatur entspricht. Weiterhin sind aber auch komplexere Abhängigkeiten des lastabhängigen Betriebsparameters sowohl von der Temperatur als auch der Änderung der Temperatur denkbar.

Im Gegensatz zu bekannten Antrieben, welche teilweise eine temperaturabhängige Überlastabschaltung vorsehen, ermöglicht die erfindungsgemäße Steuerung anhand der Temperatur, bei welcher lediglich auf den Schnelllaufmodus verzichtet wird und in den Normallaufmodus umgeschaltet wird, wenn der temperaturabhängige Betriebsparameter einen gewissen Grenzwert überschreitet, eine dauerhafte Verfügbarkeit des Torantriebes. Dennoch kann hierdurch eine Überlastung des Torantriebes sicher verhindert werden.

Allerdings müssen zur Bestimmung der Temperatur zusätzliche Sensoren verwendet werden, was den konstruktiven Aufwand für die Steuerung des Torantriebes erhöht. Deshalb umfaßt das Bestimmen des lastabhängigen Betriebsparameters vorteilhafterweise das Bestimmen des vom Motor erzeugten Drehmoments. Das Drehmoment des Motors ist dabei ebenfalls ein klarer Indikator für die Belastung der Antriebseinheit, so daß es als Kenngröße zur erfindungsgemäßen Steuerung herangezogen werden kann. Dabei ist bei einem Gleichstrommotor die elektrische Stromstärke proportional zum Drehmoment, so daß auch diese zur erfindungsgemäßen Ansteuerung herangezogen werden kann.

Weiterhin vorteilhafterweise umfaßt deshalb das Bestimmen des lastabhängigen Betriebsparameters das Bestimmen der elektrischen Stromstärke und/oder der elektrischen Leistung beim Betrieb des Antriebsmotors des Torantriebes. Die elektrische Stromstärke bzw. die elektrische Leistung des Antriebsmotors ist dabei ein direkter Indikator für die Belastung des Antriebes, so daß der lastabhängige Betriebsparameter auf Grundlage dieser Werte bestimmt werden kann. Da die elektrische Stromstärke und/oder die elektrische Leistung üblicherweise ohnehin gemessen werden und somit der Steuerung als Kenngrößen zur Verfügung stehen, kann das erfindungsgemäße Verfahren ohne konstruktive Änderung am Torantrieb verwendet werden, indem die Steuerung entsprechend angepaßt wird.

Weiterhin vorteilhafterweise umfaßt dabei das Bestimmen des lastabhängigen Betriebsparameters das Bestimmen der maximalen Stromstärke und/oder maximalen elektrischen Leistung innerhalb eines bestimmten Zeitintervalls. Das Zeitintervall kann dabei wie bei bekannten Torantrieben z. B. die vorausgegangenen 5, 10, 30 oder 60 Minuten umfassen. Anders als dort wird aber zur Bestimmung, ob vom Schnelllaufmodus in den Normallaufmodus geschaltet werden soll, nicht eine feste Zyklenanzahl herangezogen, sondern die maximale elektrische Stromstärke und/oder maximale elektrische Leistung während dieses Zeitintervalls. Diese hängt sehr viel enger mit der tatsächlichen Belastung des Antriebes zusammen und ermöglicht so eine bessere Verfügbarkeit des Schnelllaufmodus.

Weiterhin vorteilhafterweise umfaßt das Bestimmen des lastabhängigen Betriebsparameters das Bestimmen des Integrals über die elektrische Stromstärke und/oder elektrische Leistung über ein bestimmtes Zeitintervall. Insbesondere entspricht dabei der lastabhängige Betriebsparameter vorteilhafterweise diesem Integral über die elektrische Stromstärke und/oder elektrische Leistung über ein bestimmtes Zeitintervall. Wiederum kann das Zeitintervall z. B. die vergangenen 5, 10, 30 oder 60 Minuten umfassen. Das Integral über die elektrische Stromstärke und/oder elektrische Leistung zum Betrieb des Antriebsmotors entspricht damit sehr genau der tatsächlichen Belastung des Torantriebes während diesem Zeitintervall, so daß sich hierdurch eine optimale Ansteuerung des Torantriebes ergibt.

Denkbar sind weiterhin vorteilhafterweise auch solche Ansteuerungen, welche sowohl auf das Integral über die elektrische Stromstärke und/oder elektrische Leistung als auch auf die maximale elektrische Stromstärke und/oder maximale elektrische Leistung innerhalb eines bestimmten Zeitintervalls als Kenngrößen zurückgreifen. So ergibt sich eine Ansteuerung, bei welcher die Geschwindigkeit des Torantriebs noch besser auf die reale Last optimiert wird.

Ebenso ist es vorteilhafterweise möglich, das Tor mit mehr als zwei unterschiedlichen Geschwindigkeiten zu verfahren, je nachdem in welchem Bereich sich der lastabhängige Betriebsparameter befindet. Ebenso können mehrere lastabhängige Betriebsparameter unter Zuhilfenahme einer komplexeren Steuerung als Kenngrößen verwendet werden. Auch eine stufenlose Geschwindigkeitsregelung auf Grundlage des oder der lastabhängigen Betriebsparameter ist möglich.

Die vorliegende Erfindung umfaßt weiterhin einen Torantrieb mit einer Steuerung, welche mindestens einen Schnelllaufmodus und mindestens einen Normallaufmodus umfaßt und welche nach einem der oben beschriebenen Verfahren arbeitet. Ein solcher Torantrieb weist offensichtlich die gleichen Vorteile auf wie das oben beschriebene Verfahren.

Vorteilhafterweise umfaßt der Torantrieb dabei eine Sensoreinheit, insbesondere zur Temperaturmessung, zur Stromstärkemessung oder zur Leistungsmessung. Durch diese Sensoreinheit können die entsprechenden Kenngrößen bestimmt werden, auf deren Grundlage der lastabhängige Betriebsparameter bestimmt werden kann.

Die vorliegende Erfindung wird nun anhand von Zeichnungen näher erläutert. Dabei zeigen:
- Figur 1:: ein Flußdiagramm eines Verfahrens zum Betrieb eines Torantriebs gemäß dem Stand der Technik und
- Figur 2:: ein Flußdiagramm eines Verfahrens zum Betrieb eines Torantriebs gemäß der vorliegenden Erfindung.

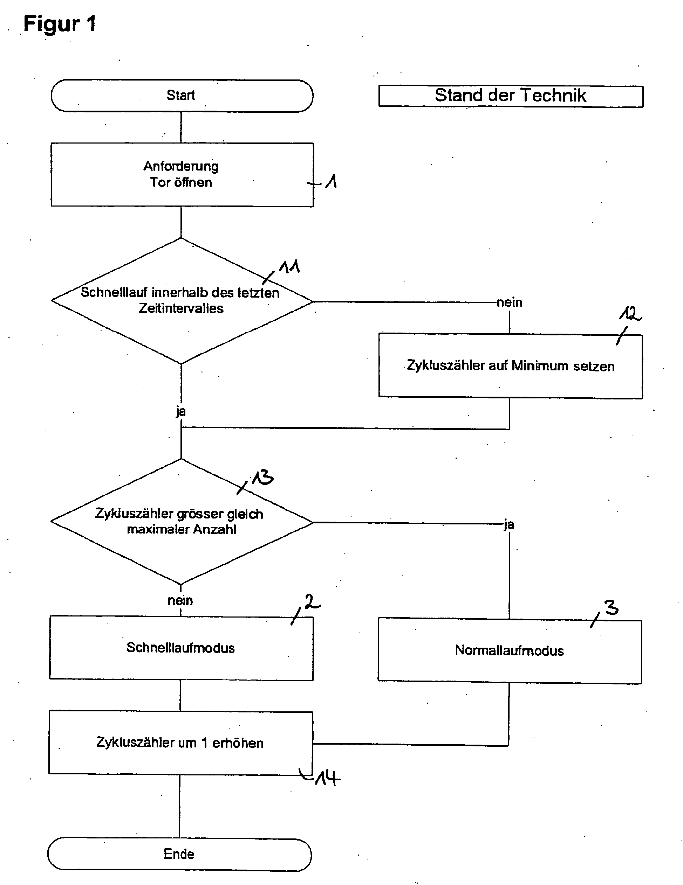

Ein Verfahren zum Betrieb eines Torantriebs gemäß dem Stand der Technik wird nochmals kurz anhand des in Figur 1 gezeigten Flußdiagramms erläutert. Erhält die Steuerung des Torantriebs eine Anforderung 1 zum Öffnen des Tores, wird dort in einem Schritt 11 zunächst überprüft, ob innerhalb eines bestimmten Zeitintervalls vor dem Erhalt des Anforderungssignals 1 ein Schelllauf stattgefunden hat. Hat kein solcher Schnellauf stattgefunden, wird in einem Schritt 12 der Zykluszähler auf Minimum gesetzt, während ansonsten direkt Schritt 13 folgt, in welchem der Zykluszähler mit der maximal erlaubten Anzahl von Schnelllaufzyklen verglichen wird. Ergibt dieser Vergleich in Schritt 13, daß der Zykluszähler kleiner ist als die maximal erlaubte Anzahl von Schnelllaufzyklen, schaltet die Steuerung in den Schnelllaufmodus 2, um das Tor zu öffnen. Andernfalls wird in den Normallaufmodus 3 geschaltet. Im nächsten Schritt 14 wird der Zykluszähler dann um 1 erhöht.

Durch dieses Vorgehen hängt die Auswahl zwischen Schnelllaufmodus 2 und Normallaufmodus 3 in Schritt 13 einzig von der innerhalb eines gewissen Zeitintervalls gefahrenen Anzahl von Torlaufzyklen ab, ohne dass die tatsächliche Belastung des Torantriebs berücksichtigt würde. Bei leichtgängigen Antrieben führt dies dazu, daß der Schnelllaufmodus oft auch dann nicht zur Verfügung steht, wenn der Antrieb eigentlich ohne Gefahr einer Überlastung weiterhin im Schnelllaufmodus betrieben werden könnte.

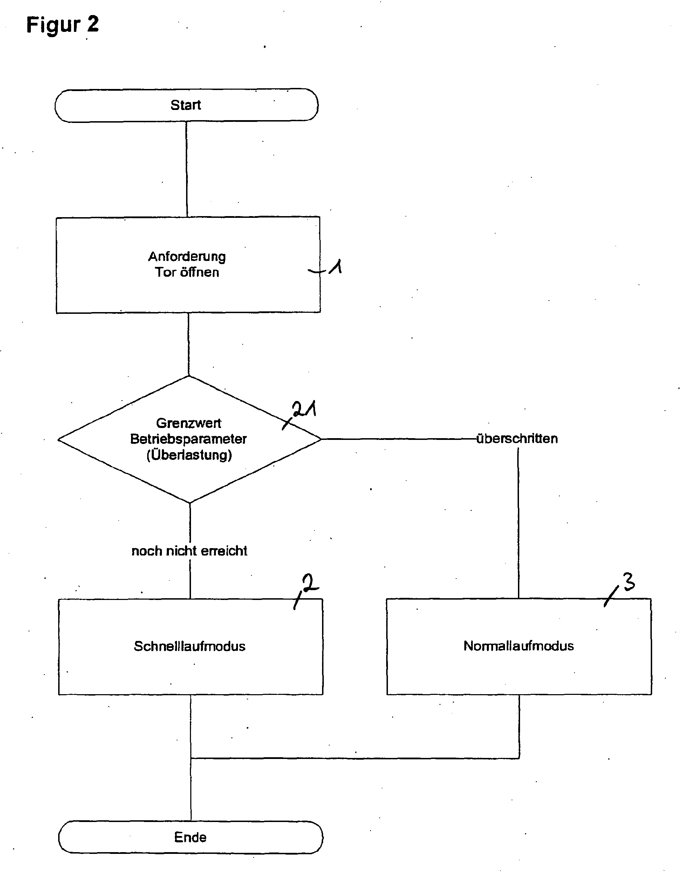

Das erfindungsgemäße Verfahren wird nun anhand des in Figur 2 gezeigten Flußdiagramms näher beschrieben. Bei diesem wird auf die Anforderung 1 hin, das Tor zu öffnen, in Schritt 21 ein lastabhängiger Betriebsparameter des Torantriebs mit einem maximal zulässigen Grenzwert verglichen. Als lastabhängiger Betriebsparameter kommen dabei z. B. die Temperatur einer Komponente des Torantriebs oder deren Änderung in Frage. Alternativ kann die zum Betrieb des Antriebsmotors des Torantriebs verwendete elektrische Stromstärke und/oder elektrische Leistung zur Bestimmung des lastabhängigen Betriebsparameters verwendet werden, da diese die tatsächliche Belastung des Antriebs genau widerspiegeln. Insbesondere kann dabei das integral über die elektrische Stromstärke und/oder elektrische Leistung über ein bestimmtes Zeitintervall erfaßt und als lastabhängiger Parameter herangezogen werden. Übersteigt der lastabhängige Betriebsparameter den Grenzwert, wird in den Normallaufmodus 3 geschaltet, während ansonsten der Schnelllaufmodus 2 verwendet wird.

Der erfindungsgemäße Vergleich des lastabhängigen Betriebsparameters mit einem maximal zulässigen Grenzwert in Schritt 21 erlaubt es so, eine maximale Verfügbarkeit des Schnelllaufmodus 2 zu erreichen, ohne daß hierdurch die Gefahr einer Überlastung gegeben wäre. Dabei wird anstelle der Anzahl der vorangegangen Torlaufzyklen die tatsächliche Belastung des Torantriebs durch diese vorangegangenen Torlaufzyklen berücksichtigt.

## Patentansprüche

1. Verfahren zum Betrieb eines Torantriebes, welcher mindestens einen Schnelllaufmodus, wobei das Tor mit höherer Geschwindigkeit geöffnet und mit Normalgeschwindigkeit geschlossen wird, und mindestens einen Normallaufmodus, wobei das Tor mit Normalgeschwindigkeit geöffnet und geschlossen wird, aufweist, mit den Schritten:
- Bestimmen eines lastabhängigen Betriebsparameters des Torantriebs mit einer Sensoreinheit
- Wechseln vom Schnelllaufmodus in den Normallaufmodus in Abhängigkeit von dem lastabhängigen Betriebsparameter, um eine Überlastung des Torantriebs zu verhindern, d.h. sobald der lastabhängige Betriebsparameter einen Grenzwert übersteigt.

2. Verfahren nach Anspruch 1, wobei das Bestimmen des lastabhängigen Betriebsparameters die Messung der Temperatur einer Komponente des Torantriebs, insbesondere des Motors oder der Leistungselektronik umfasst.

3. Verfahren nach Anspruch 2, wobei der lastabhängige Betriebsparameter von der gemessenen Temperatur und/oder der Änderung der gemessenen Temperatur abhängt, und insbesondere der gemessenen Temperatur oder der Änderung der gemessenen Temperatur entspricht.

4. Verfahren nach Anspruch 1, wobei das Bestimmen des lastabhängigen Betriebsparameters das Bestimmen des vom Motor erzeugten Drehmoments umfasst.

5. Verfahren nach Anspruch 1, wobei das Bestimmen des lastabhängigen Betriebsparameters das Bestimmen der elektrischen Stromstärke und/oder elektrischen Leistung beim Betrieb des Antriebsmotors des Torantriebs umfasst.

6. Verfahren nach Anspruch 5, wobei das Bestimmen des lastabhängigen Betriebsparameters das Bestimmen der maximalen elektrischen Stromstärke und/oder maximalen elektrischen Leistung innerhalb eines bestimmten Zeitintervalls umfasst.

7. Verfahren nach Anspruch 5, wobei das Bestimmen des lastabhängigen Betriebsparameters das Bestimmen des Integrals über die elektrische Stromstärke und/oder elektrische Leistung über ein bestimmtes Zeitintervall umfasst und insbesondere der lastabhängige Betriebsparameter dem Integral über die elektrische Stromstärke und/oder elektrische Leistung über ein bestimmtes Zeitintervall entspricht.

8. Torantrieb mit einer Steuerung zur Durchführung des Verfahrens nach den Ansprüchen 1 bis 7 und mit einer Sensoreinheit zur Bestimmung eines lastabhängigen Betriebsparameters des Torantriebs, welche Steuerung mindestens einen Schnelllaufmodus, wobei das Tor mit höherer Geschwindigkeit geöffnet und mit Normalgeschwindigkeit geschlossen wird, und mindestens einen Normallaufmodus, wobei das Tor mit Normalgeschwindigkeit geöffnet und geschlossen wird, umfasst und somit nach einem der Verfahren nach den Ansprüchen 1 bis 7 arbeitet.

9. Torantrieb nach Anspruch 8, mit der Sensoreinheit, insbesondere zur Temperaturmessung, zur Stromstärkemessung oder zur Leistungsmessung.

## Claims

1. Method for operating a door drive which has at least one fast-running mode, where the door is opened at a relatively high speed and closed at a normal speed, and at least one normal-running mode, where the door is opened and closed at a normal speed, the said method comprising the steps of:
- determining a load-dependent operating parameter of the door drive with a sensor unit,
- changing over from the fast-running mode to the normal-running mode as a function of the load-dependent operating parameter in order to avoid overloading the door drive, that is to say as soon as the load-dependent operating parameter exceeds a limit value.

2. Method according to Claim 1, where determining the load-dependent operating parameter involves measuring the temperature of a component of the door drive, in particular the motor or the power electronics.

3. Method according to Claim 2, where the load-dependent operating parameter depends on the measured temperature and/or the change in the measured temperature, and in particular corresponds to the measured temperature or to the change in the measured temperature.

4. Method according to Claim 1, where determining the load-dependent operating parameter involves determining the torque generated by the motor.

5. Method according to Claim 1, where determining the load-dependent operating parameter involves determining the electrical current intensity and/or electrical power during operation of the drive motor of the door drive.

6. Method according to Claim 5, where determining the load-dependent operating parameter involves determining the maximum electrical current intensity and/or maximum electrical power within a specific time interval.

7. Method according to Claim 5, where determining the load-dependent operating parameter involves determining the integral with respect to the electrical current intensity and/or electrical power over a specific time interval, and in particular the load-dependent operating parameter corresponds to the integral with respect to the electrical current intensity and/or electrical power over a specific time interval.

8. Door drive having a control system for carrying out the method according to Claims 1 to 7 and having a sensor unit for determining a load-dependent operating parameter of the door drive, which control system comprises at least one fast-running mode, where the door is opened at a relatively high speed and closed at a normal speed, and at least one normal-running mode, where the door is opened and closed at a normal speed, and therefore operates in accordance with one of the methods according to Claims 1 to 7.

9. Door drive according to Claim 8, having the sensor unit, in particular for temperature measurement, for current intensity measurement or for power measurement.

## Revendications

1. Procédé de fonctionnement d'un entraînement de porte, qui présente au moins un mode de déplacement rapide, où la porte est ouverte à une plus grande vitesse et est fermée à la vitesse normale, et au moins un mode de déplacement normal, où la porte est ouverte et fermée à la vitesse normale, avec les étapes de:
- détermination d'un paramètre de fonctionnement dépendant de la charge de l'entraînement de porte avec une unité de capteurs,
- changement du mode de déplacement rapide en mode de déplacement normal en fonction du paramètre de fonctionnement dépendant de la charge pour éviter une surcharge de l'entraînement de porte, c'est-à-dire dès que le paramètre de fonctionnement dépendant de la charge dépasse une valeur limite.

2. Procédé selon la revendication 1, où la détermination du paramètre de fonctionnement dépendant de la charge comprend la mesure de la température d'un composant de l'entraînement de porte, en particulier du moteur ou de l'électronique de puissance.

3. Procédé selon la revendication 2, où le paramètre de fonctionnement dépendant de la charge dépend de la température mesurée et/ou de la modification de la température mesurée et correspond en particulier à la température mesurée ou à la modification de la température mesurée.

4. Procédé selon la revendication 1, où la détermination du paramètre de fonctionnement dépendant de la charge comprend la détermination du couple de rotation produit par le moteur.

5. Procédé selon la revendication 1, où la détermination du paramètre de fonctionnement dépendant de la charge comprend la détermination de la force de courant électrique et/ou d'une puissance électrique lors du fonctionnement du moteur d'entraînement de l'entraînement de porte.

6. Procédé selon la revendication 5, où la détermination du paramètre de fonctionnement dépendant de la charge comprend la détermination de la force de courant électrique maximale et/ou de la puissance électrique maximale à l'intérieur d'un intervalle de temps défini.

7. Procédé selon la revendication 5, où la détermination du paramètre de fonctionnement dépendant de la charge comprend la détermination de l'intégrale se rapportant à la force de courant électrique et/ou la puissance électrique sur un intervalle de temps déterminé, et en particulier le paramètre de fonctionnement dépendant de la charge correspond à l'intégrale de la force de courant électrique et/ou de la puissance électrique sur un intervalle de temps déterminé.

8. Entraînement de porte avec une commande pour l'exécution du procédé selon les revendications 1 à 7 et avec une unité de capteurs pour la détermination d'un paramètre de fonctionnement dépendant de la charge de l'entraînement de porte, ladite commande comprenant au moins un mode de fonctionnement rapide, où la porte est ouverte avec une plus grande vitesse et est fermée à la vitesse normale, et au moins un mode de fonctionnement normal, où la porte est ouverte et fermée à la vitesse normale et fonctionne ainsi selon l'un des procédés suivants les revendications 1 à 7.

9. Entraînement de porte selon la revendication 8, avec l'unité de capteurs, en particulier pour la mesure de la température, pour la mesure de la force du courant ou pour la mesure de la puissance.
